# EUROPEAN PATENT APPLICATION

(11) **EP 4 691 738 A1**
(43) Date of publication of application: **11.02.2026**
(21) Application number: 23943299.0
(22) Date of filing: 14.11.2023
(51) Int. Cl.: B29C 64/321, B29C 64/393, B29C 64/295, B29C 64/209, B33Y 30/00, B33Y 40/00, B33Y 40/10, B33Y 50/02

(54) **CIRCULATING INK SUPPLY SYSTEM FOR 3D INK-JET PRINTING AND CONTROL METHOD THEREOF, AND CIRCULATING INK SUPPLY DEVICE**

(30) Priority: 25.06.2023 CN 202310754395; 25.06.2023 CN 202310758270
(71) Applicant: Zhejiang Flashforge 3D Technology Co., Ltd., Jinhua, Zhejiang 321016 (CN)
(72) Inventor: DAI, Yunqiang, Jinhua, Zhejiang 321016 (CN)
(74) Representative: Leihkauf, Steffen Falk
(86) International application number: PCT/CN2023/131547
(87) International publication number: WO 2025/000820

(57) **Abstract**

Disclosed in the present invention are a circulating ink supply system for 3D ink-jet printing and a control method thereof, wherein the circulating ink supply system comprises an ink-jet printing head, a circulation module, a heating element, and a power module. The circulation module is heated by the heating element to enable high-temperature phase change ink or high-viscosity ink to have better fluidity, and circulation kinetic energy is provided by the power module, so that the circulation module achieves circulation of the fluid. Also disclosed in the present invention is an integrated design of an integrated ink-jet printing circulating ink supply device, wherein most components and modules are arranged in a heating cavity having a heating function, a fluid passage is achieved by heating an internal flow channel of the heating cavity, and by means of heat conduction, it is ensured that the temperature the entire circulation system is uniform and the high-temperature phase change material is in a molten state, thereby achieving high-flow printing. Due to the integrated structural design, the structure is more compact, the cost is low, maintenance is easy, and the heating design is more concise and concentrated, thereby ensuring the temperature uniformity of fluid.

## Description

### TECHNICAL FIELD

The present disclosure belongs to the field of 3D printing, and specifically relates to a circulating ink supply system supporting high-flow, high-temperature, high-viscosity phase change printing materials, an integrated inkjet printing circulating ink supply device and a circulating ink supply method thereof.

### BACKGROUND

3D printers build three-dimensional models by additive manufacturing methods. A wax 3D printer, belonging to one kind of additive manufacturing equipment, takes purple wax as a printing material and white wax as a supporting material, and jets high-temperature-heated wax materials in a liquid state to a print platform. The wax materials subsequently solidify into a solid state at normal temperature, to build a model through layer-by-layer stacking. As wax 3D printing models have high precision, smooth surfaces and other advantages, wax 3D printers are widely applied to jewelry accessories, aerospace, engines and other manufacturing industries. Printing materials used by the wax 3D printers are white wax and purple wax, wax materials are placed in containers, the containers are loaded in an ink supply assembly, and the wax materials in the containers flow into the ink supply assembly and into an inkjet printhead upon high-temperature heating. The inkjet printhead prints the wax materials onto a print panel layer by layer to construct three-dimensional models.

Generally, an ink supply system is provided therein with a circulating structure. The existing circulating structure is generally provided with an ink supply cartridge and an ink return cartridge. The printing material in the ink supply cartridge enters an inkjet printhead for printing through a circulating ink supply pump, and then flows from the inkjet printhead for printing to the ink return cartridge, so as to realize circulating flow of the printing material. However, for the wax 3D printers, the printing material is wax, which has relatively high viscosity and is a high-viscosity high-temperature phase change material with poor fluidity. If temperature is not uniform, it is easy to cause blockage in the circulating structure and a slow flowing velocity. The phase change material becomes a solid at a melting point, and there is a phase change process when re-heating. Current circulating ink supply modules cannot support wax printing and have problems such as high cost, large space, complex connecting pipelines, and low temperature uniformity.

### SUMMARY

The present disclosure aims at providing a circulating ink supply system suitable for 3D inkjet printing and a control method therefor, particularly suitable for high-flow printing of high-temperature phase change or high-viscosity printing materials. An integrated 3D inkjet printing circulating ink supply device in the circulating ink supply system has advantages such as low cost, more compact structure, easy maintenance, and good temperature uniformity, and is particularly suitable for high-flow printing of high-temperature phase change or high-viscosity printing materials.

In order to achieve the above objectives, the present disclosure adopts the following technical solutions.

The present disclosure aims at providing a circulating ink supply system suitable for 3D inkjet printing and a control method therefor, particularly suitable for high-flow printing of high-temperature phase change or high-viscosity printing materials.

In order to achieve the above objectives, the present disclosure adopts the following technical solutions.

In the first aspect, a circulating ink supply system suitable for 3D inkjet printing is provided, including:
an inkjet printhead, provided with a plurality of nozzles for jetting ink, wherein the ink is a high-temperature phase change ink or a high-viscosity ink;
a circulating module, provided with an ink return cavity and an ink inlet cavity, wherein the ink return cavity is communicated with the ink inlet cavity; and the ink return cavity and the ink inlet cavity are connected to the inkjet printhead through an ink return pipe and an ink inlet pipe, respectively;
a heating element, configured to heat the circulating module; and
a power module, configured to provide kinetic energy for the circulating ink supply system, to make the ink circulate between the circulating module and the inkjet printhead.

The circulating module is heated by the heating element, so that the high-temperature phase change ink or the high-viscosity ink has good fluidity; the power module provides the kinetic energy for the circulation, so that the ink in the ink inlet cavity enters the inkjet printhead through the ink inlet pipe and flows to the ink return cavity through the ink return pipe, and the ink in the ink return cavity is conveyed to the connected ink inlet cavity, thus realizing circulation of fluid.

In the second aspect, the present disclosure further provides a control method for a circulating ink supply system suitable for 3D inkjet printing, wherein the circulating ink supply system is as described in the preceding, and the control method includes steps of:
(1) when the inkjet printhead is in a printing state, the power module provides the kinetic energy for circulation of the ink;
(2) the ink in the ink inlet cavity flows, after entering the inkjet printhead through the ink inlet pipe, from the ink return pipe to the ink return cavity; and
(3) when the ink in the ink return cavity reaches a certain height, the ink enters the ink inlet cavity communicating with the ink return cavity, thus realizing circulation of the ink in the inkjet printhead and a circulating ink supply structure.

Another control method for a circulating ink supply system suitable for 3D inkjet printing is provided, wherein the circulating ink supply system is as described in the preceding, and the control method includes steps of:
(1) when the inkjet printhead is in a printing state, an air-pressure control module controls a pressure of the ink inlet cavity, to make it greater than a pressure of the ink return cavity, wherein the pressure of the ink inlet cavity is a positive pressure or a negative pressure;
(2) the ink in the ink inlet cavity flows, after entering the inkjet printhead through the ink inlet pipe, from the ink return pipe to the ink return cavity; and
(3) a reflux pump is started, the ink in the ink return cavity passes through a reflux valve, the reflux pump, and a filter in sequence to a buffer cavity, wherein when the ink in the buffer cavity reaches a certain height, the ink flows from the buffer cavity to the ink inlet cavity through a communicating hole, thus realizing circulation of the ink in the inkjet printhead and the circulating module.

Another control method for a circulating ink supply system suitable for 3D inkjet printing is provided, wherein the circulating ink supply system is as described in the preceding, and the control method includes following steps:
(1) when the inkjet printhead is in a printing state, the air-pressure control module controls a pressure between the ink inlet cavity and the ink return cavity, to make a pressure of the ink inlet cavity greater than a pressure of the ink return cavity, wherein the pressure of the ink inlet cavity is a positive pressure or a negative pressure, and the pressure of the ink return cavity is controlled to be a negative pressure;
(2) the ink in the ink inlet cavity flows, after entering a spray head through the ink inlet pipe, from the ink return pipe to the ink return cavity; and
(3) when the ink in the ink return cavity reaches a certain height, the ink flows from the ink return cavity to an ink return buffer cavity through the communicating hole, wherein when a liquid level of the ink return cavity reaches a set height, an ink return liquid-level sensor in the ink return cavity is triggered when the ink is detected, the reflux pump is started, and the ink in the ink return buffer cavity is filtered by the reflux valve, the reflux pump, and the filter in sequence and then flows into an ink inlet buffer cavity, wherein when the ink in the ink inlet buffer cavity reaches a certain height, the ink flows from the ink inlet buffer cavity to the ink inlet cavity, thus realizing circulation of the ink in the inkjet printhead and the circulating module.

In the third aspect, the present disclosure further provides an integrated inkjet printing circulating ink supply device, including:
a heating chamber, provided with an ink return cavity, an ink return buffer cavity, an ink inlet buffer cavity and an ink inlet cavity, wherein the ink inlet cavity and the ink inlet buffer cavity are provided adjacent to each other and are communicated through a first channel in the heating chamber; and the ink return cavity and the ink return buffer cavity are provided adjacent to each other and are communicated through a communicating hole;
a heating element, provided on a periphery of the heating chamber and configured to heat the heating chamber;
a reflux device, at least partially embedded in the heating chamber, wherein the reflux device communicates the ink return buffer cavity with the ink inlet buffer cavity through internal channels located in the heating chamber; and
an ink inlet pipe and an ink return pipe, wherein the ink inlet pipe connects the ink inlet cavity and the inkjet printhead, and the ink return pipe connects the ink return cavity and the inkjet printhead.

Another integrated 3D inkjet printing circulating ink supply device is provided, including:
a heating chamber, provided with an ink return cavity, a buffer cavity and an ink inlet cavity, wherein the buffer cavity is located between the ink return cavity and the ink inlet cavity, and the ink inlet cavity and the buffer cavity are communicated through a communicating hole in the heating chamber;
a heating element, provided on a periphery of the heating chamber and configured to heat the heating chamber;
a reflux device, at least partially embedded in the heating chamber, wherein the reflux device communicates the ink return cavity with the buffer cavity through internal channels located in the heating chamber; and
an ink inlet pipe and an ink return pipe, wherein the ink inlet pipe connects the ink inlet cavity and an inkjet printhead, and the ink return pipe connects the ink return cavity and the inkjet printhead.

By using the above technical solutions, the present disclosure has the following beneficial effects:
1. The heating assembly heats the whole circulating module, to make the ink maintain a flowable state, thereby preventing it from cooling and solidifying or being incapable of flowing due to high viscosity, so that the heating assembly is particularly suitable for high-temperature phase change material ink or high-viscosity ink (for example, all inks with a viscosity of 1-200 cP). The ink circulates in the inkjet printhead and the circulating module by means of the power module, which can ensure better temperature uniformity of the fluid, and carry away air bubbles and impurities in the spray head and filter out the same.
2. By providing the buffer cavity, the air-pressure control module controls the pressure difference between the ink inlet cavity and the ink return cavity, so that the ink in the ink return cavity flows to the ink inlet cavity through the buffer cavity, and the ink in the ink inlet cavity enters the inkjet printhead through the ink inlet pipe, and flows to the ink return cavity through the ink return pipe, thus realizing the circulation of the fluid. A function of the buffer cavity is to eliminate air bubbles mixed in the ink, a second function is to make the ink flow more smoothly and eliminate flow pulse, and a third function is to make the temperature of the ink more uniform. For a low-flow working condition, the buffer cavity may not be provided, and for a high-flow working condition, providing the buffer cavity makes the system more stable.
3. In different working states, flow rates of the fluid in the circulating ink supply system are different, and the rotation speed of the reflux pump in the reflux device controls the flow rate of the fluid, so that the circulating ink supply system stably supplies the ink.
4. For different working states of the inkjet printhead, such as a printing state, a dormant state, an ink-pressing state, and a power-on state, the ink supply system has different methods to keep the ink supply system working stably.
5. The circulating module is integrally designed. Except the air-pressure control module, the ink inlet pipe, and the ink outlet pipe, all of remaining parts and modules are provided in the heating chamber having a heating function, fluid channels are realized by internal flow channels of the heating chamber, the heating chamber is made of a uniform heat conducting material, and through heat conduction, the whole circulation system is ensured to have a uniform temperature, and the high-temperature phase change material is ensured to be in a molten state, so as to realize the high-flow printing. The integrated structure design makes the structure more compact, low-cost and easy to maintain, and the heating design is simpler and more concentrated to ensure the temperature uniformity of the fluid.
6. Two-stage control with the temperature sensor in the ink inlet cavity and the temperature sensor provided on the side wall of the ink return cavity ensures heating uniformity of the fluid temperature and prevent fluid deterioration caused by over-temperature of initial heating. The temperature sensor in the ink inlet cavity directly measures the temperature of the fluid, and can directly feedback a temperature of an object fluid entering the spray head; in the initial heating, circulation is not started, particularly for the phase change fluid, with a low temperature inside the fluid; therefore, by the temperature sensor mounted on the side wall of the ink return cavity, the heating chamber is prevented from being heated to a relatively high temperature to damage the fluid and affect printing.
7. The present circulating ink supply system supports a high-flow high-viscosity system. A high-temperature phase change material, such as a wax material, has a high viscosity at a certain temperature. The heating assembly heats the whole circulating module, so as to make the ink maintain a flowable state, thereby preventing it from cooling and solidifying or being incapable of flowing due to high viscosity, so that the system is particularly suitable for high-temperature phase change material ink or high-viscosity ink (for example, all inks with a viscosity of 1-200 cP). Power of the whole system circulation is determined by the pressure difference, and acceleration of the flow rate can be realized as long as the pressure difference is increased. In addition, electronic components, pumps and the like are all of types for supporting high-viscosity fluids.

### BRIEF DESCRIPTION OF DRAWINGS

The present disclosure is further described below with reference to drawings.
FIG. 1 is a schematic diagram of a circulating ink supply system in Embodiment 1.
FIG. 2 is a structural schematic view of an integrated inkjet printing circulating ink supply device from one angle.
FIG. 3 is a structural schematic view of the integrated inkjet printing circulating ink supply device from another angle.
FIG. 4 is a structural schematic view of an ink cartridge;
FIG. 5 is a structural schematic view of the ink cartridge and a cover plate, wherein part of internal flow channels in the cover plate are simply indicated by dotted lines;
FIG. 6 is a right view of the integrated inkjet printing circulating ink supply device;
FIG. 7 is a sectional view obtained along a plane G-G of FIG. 6;
FIG. 8 is a sectional view obtained along a plane D-D of FIG. 6;
FIG. 9 is a sectional view obtained along a plane F-F of FIG. 6;
FIG. 10 is a schematic diagram of an inkjet printhead and a circulating structure in a circulating ink supply system in Embodiment 2; and
FIG. 11 is a schematic diagram of a circulating ink supply system in Embodiment 3.

### DETAILED DESCRIPTION OF EMBODIMENTS

### Embodiment 1

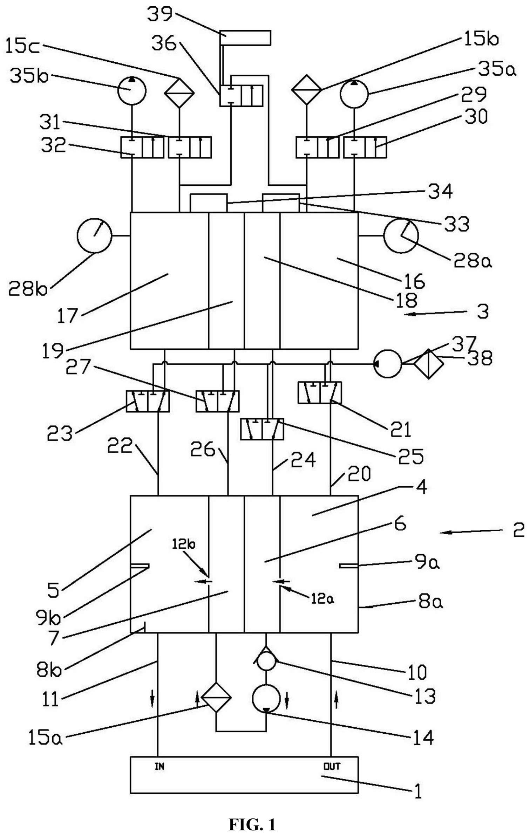

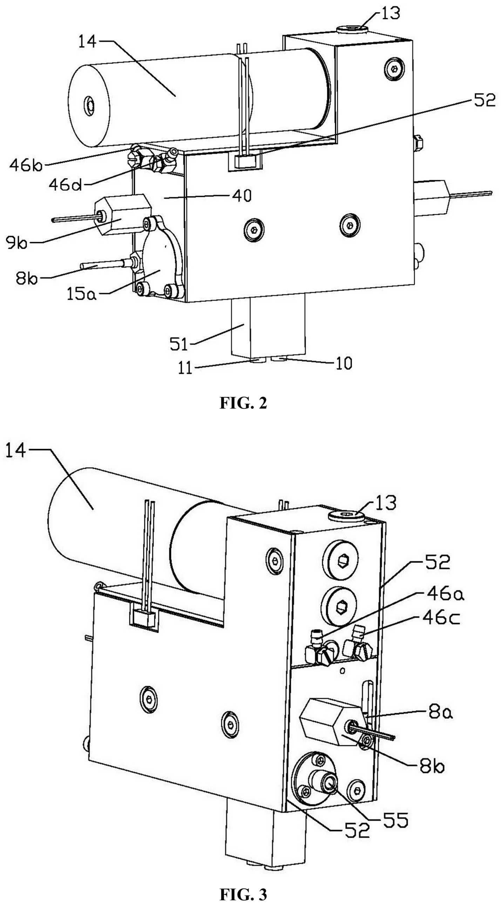

A circulating ink supply system suitable for 3D inkjet printing as shown in FIG. 1 includes an inkjet printhead 1, a circulating module 2 and an air-pressure control module 3, wherein a flow direction of ink in FIG. 1 is as shown by arrows. The inkjet printhead 1 has a plurality of nozzles for jetting ink, and the ink can be a fluid such as a phase change wax material, a binder, a fusing agent, a detailing agent, and a photosensitive resin, and is particularly suitable for high-viscosity high-flow high-temperature phase change wax systems. A melting point of wax materials is generally 60-90 °C, while the present inkjet printing circulating ink supply system can support a heating temperature of 60-150 °C, materials with viscosity of 1-200 cP, and a flow rate of more than 100 ml/min of a single inkjet printhead. The circulating structure module 2 is provided with an ink return cavity 4, an ink inlet cavity 5, an ink return buffer cavity 6 and an ink inlet buffer cavity 7. The ink inlet cavity 5 is connected to an ink inlet position IN of the inkjet printhead 1, through an ink inlet pipe 11, and the ink return cavity 4 is connected to an ink return position OUT of the inkjet printhead 1, through an ink return pipe 10. The ink inlet cavity 5 is provided therein with an ink inlet temperature sensor 8b and an ink inlet liquid-level sensor 9b respectively configured to monitor a temperature and a liquid level of ink in the ink inlet cavity 5. The ink inlet temperature sensor 8b extends into the ink inlet cavity 5 to directly measure a temperature of material. An outer wall of the ink return cavity 4 is provided with an ink return temperature sensor 8a configured to monitor a temperature of the outer wall so as to prevent an over-temperature phenomenon of initial heating. For the phase change fluid, circulation of ink is not started in initial heating, a temperature of a center in the fluid is low, and a temperature sensor mounted on the whole cavity is needed to prevent heating the cavity to a high temperature to damage peripheral fluid adhered to a surface of the cavity and thus to affect printing. The ink return cavity 4 is provided therein with an ink return liquid-level sensor 9a configured to monitor a liquid level of the ink return cavity 4. The circulating module 2 heats the ink return cavity 4, the ink inlet cavity 5, the ink return buffer cavity 6 and the ink inlet buffer cavity 7 by a heating assembly (a component denoted by reference sign 52 in FIG. 2, not shown in FIG. 1). A communicating hole 12a is formed between the ink return cavity 4 and the ink return buffer cavity 6, and the communicating hole 12a communicates the ink return cavity 4 with the ink return buffer cavity 6. A communicating hole 12b is provided between the ink inlet cavity 5 and the ink inlet buffer cavity 7, and the communicating hole 12b communicates the ink inlet cavity 5 with the ink inlet buffer cavity 7. The ink return buffer cavity 6 and the ink inlet buffer cavity 7 are communicated through a reflux device. The reflux device includes a reflux valve 13, a reflux pump 14 and a filter 15a. The ink return buffer cavity 6 is connected to the reflux valve 13 through a pipeline or a channel, the reflux valve 13 is connected to the reflux pump 14 through a pipeline or a channel, the reflux pump 14 is connected to the filter 15a through a pipeline or a channel, and the filter 15a is connected to the ink inlet buffer cavity 7. The reflux pump 14 drives the ink to circulate, and a flow velocity of reflux ink is adjusted by adjusting a rotation speed of the reflux pump 14, thus ensuring stable supply of the fluid to the inkjet printhead 1. The reflux valve 13 may be a one-way valve, a solenoid valve, or the like, so as to make the ink flow in a single direction. A corresponding filter may be selected as the filter 15a according to an ink material, so as to filter the ink flowing back to the ink inlet buffer cavity 7.

As shown in FIG. 1, the air-pressure control module 3 is connected to the ink inlet cavity 5 and the ink return cavity 4, for controlling a pressure difference between the ink inlet cavity 5 and the ink return cavity 4 so as to convert it into kinetic energy of the circulating ink supply system, so that the ink circulates between the circulating module 2 and the inkjet printhead 1. The air-pressure control module 3 includes a first pressure control module and a second pressure control module, wherein the first pressure control module is configured to control a pressure of the ink return cavity 4, and the pressure of the ink return cavity 4 is a negative pressure; the second pressure control module is configured to control a pressure of the ink inlet cavity 5, and the pressure of the ink inlet cavity 5 can be a positive pressure or a negative pressure. The ink return buffer cavity 6 likewise can be connected to the first pressure control module or it is sealed and not separately connected to the pressure control module, or is further connected to a third pressure control module which is connected to the first pressure control module. The ink inlet buffer cavity 7 likewise can be connected to the second pressure control module or it is sealed and not separately connected to the pressure control module, or is further connected to a fourth pressure control module which is connected to the second pressure control module.

A feasible air-pressure control module 3, with principle as shown in FIG. 1, includes a first air-pressure cavity 16, a second air-pressure cavity 17, a first buffer air-pressure cavity 18 and a second buffer air-pressure cavity 19. The first air-pressure cavity 16 is connected to the ink return cavity 4 through a first air pipe 20 and a first positive-negative pressure switching valve 21, the second air-pressure cavity 17 is connected to the ink inlet cavity 5 through a second air pipe 22 and a second positive-negative pressure switching valve 23, the first buffer air-pressure cavity 18 is connected to the ink return buffer cavity 6 through a third air pipe 24 and a third positive-negative pressure switching valve 25, and the second buffer air-pressure cavity 19 is connected to the ink inlet buffer cavity 7 through a fourth air pipe 26 and a fourth positive-negative pressure switching valve 27. The first air-pressure cavity 16 and the second air-pressure cavity 17 are each connected to air-pressure pressure sensors 28a, 28b. The first positive-negative pressure switching valve 21, the second positive-negative pressure switching valve 23, the third positive-negative pressure switching valve 25 and the fourth positive-negative pressure switching valve 27 are all connected to a same positive-pressure pump 37. An inlet end of the positive-pressure pump 37 is connected to a filter 38. Providing two buffer air-pressure cavities can eliminate air-pressure fluctuation, so that an air-pressure control system is more stable.

The first air-pressure cavity 16 is connected to a first air supply valve 30 and a first pressure relief valve 29 respectively, the second air-pressure cavity 17 is connected to a second air supply valve 31 and a second pressure relief valve 32 respectively; the air-pressure cavities can be pressurized through the air supply valves, and the air-pressure cavities can be depressurized through the pressure relief valves. The first air-pressure cavity 16 and the first buffer air-pressure cavity 18 are connected by a first buffer connecting pipe 33, and the second air-pressure cavity 17 and the second buffer air-pressure cavity 19 are connected by a second buffer connecting pipe 34. The first pressure relief valve 29 and the second pressure relief valve 31 are connected to filters 15b, 15c, respectively; the first air supply valve 30 and the second air supply valve 32 are connected to air pumps 35a, 35b, respectively; a balance valve 36 is connected between the first air-pressure cavity 16 and the second air-pressure cavity 17, wherein the balance valve 36 is connected to a standby power supply 39, or the balance valve 36 is a normally-open solenoid valve connected to a buck module 39.

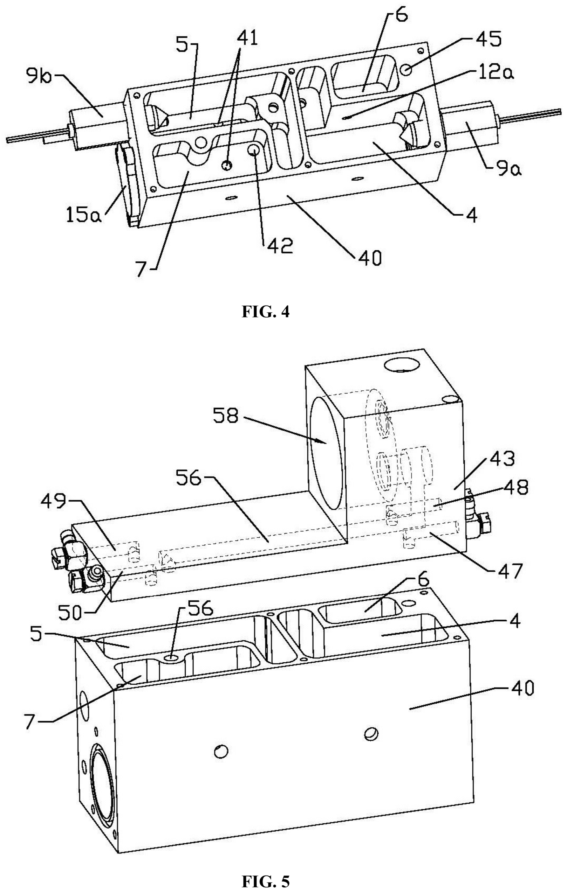

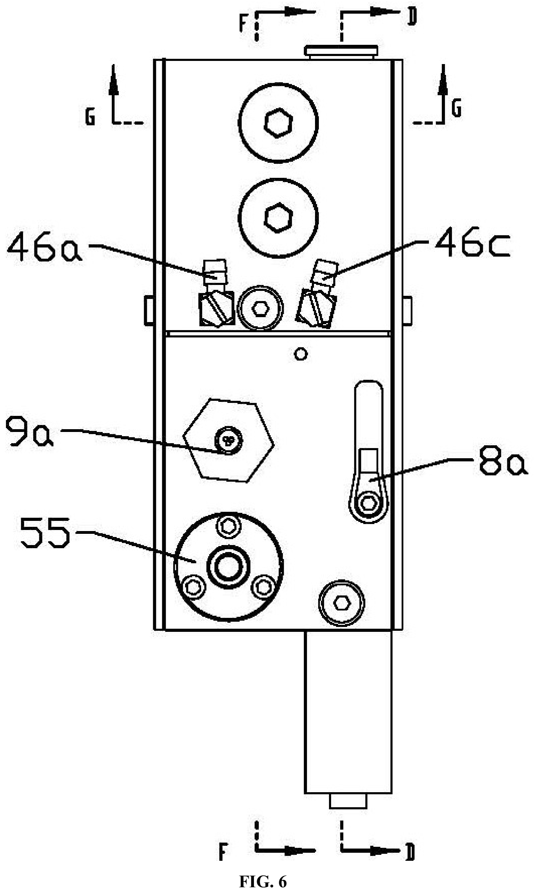

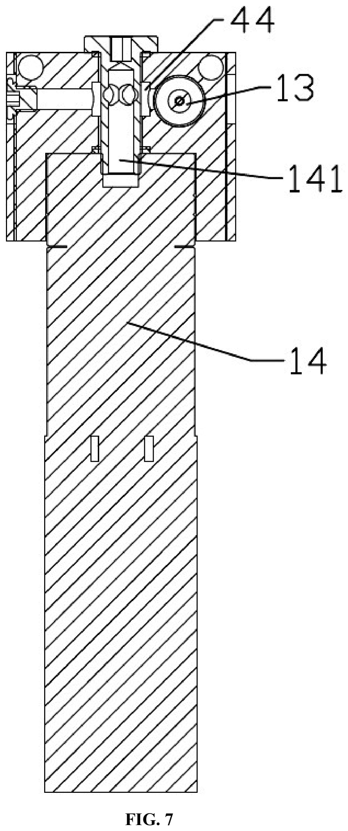

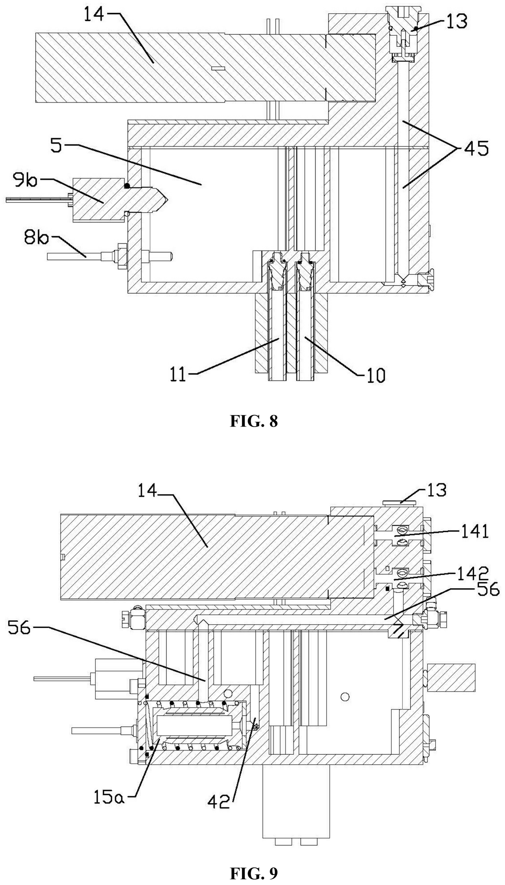

Based on the principle of the circulating ink supply system suitable for 3D inkjet printing shown in FIG. 1, the present disclosure further designs an integrated 3D inkjet printing circulating ink supply device. With reference to FIG. 2 to FIG. 9, the integrated inkjet printing circulating ink supply device includes a heating chamber, wherein the heating chamber includes an ink cartridge 40, wherein the ink cartridge 40 is substantially cuboid, and is provided therein with an L-shaped ink return cavity 4, an L-shaped ink inlet cavity 5, an ink return buffer cavity 6 and an ink inlet buffer cavity 7. For the sake of a compact structure, as shown in FIG. 4, the ink return buffer cavity 6 is in a slightly small cuboid structure and located in a half-enclosed structure of the L-shaped ink return cavity 4, and the ink inlet buffer cavity 7 is in a slightly small cuboid structure and located in a half-enclosed structure of the L-shaped ink inlet cavity 5. Short sides of the L-shaped ink inlet cavity 5 and the L-shaped ink return cavity 4 are parallel to each other and located in a middle position of the cuboid, and long sides are respectively located at two sides of the cuboid and extend towards opposite directions. A cavity wall partitioning the ink return cavity 4 and the ink return buffer cavity 6 is formed with a communicating hole 12a, a first channel 41 (equivalent to a communicating hole 12b) is formed in the ink cartridge 40 at a bottom of the ink feed buffer cavity 7, and the other end of the first channel 41 is communicated with the ink inlet cavity 5. The communicating hole 12a and the first channel 41 are both realized by forming channels inside the ink cartridge 40, instead of external pipelines, which can save space and reduce additional heating. The ink inlet cavity 5 is provided therein with an ink inlet temperature sensor 8b and an ink inlet liquid-level sensor 9b, the ink return cavity 4 is provided therein with an ink return liquid-level sensor 9a, and an outer wall of the ink return cavity 4 is provided with an ink return temperature sensor 8a configured to monitor a temperature of the outer wall of the ink cartridge 40. As shown in FIG. 9, the ink cartridge 40 has a mounting hole below the ink inlet buffer cavity 7, a filter 15a is provided in the mounting hole, the ink cartridge 40 is further formed with a second channel 42, and the second channel 42 communicates the filter 15a with the ink inlet buffer cavity 7.

With reference to FIG. 2 to FIG. 9, the heating chamber further includes a cover plate 43, and the ink cartridge 40 is hermetically and fixedly connected to the cover plate 43. The cover plate 43 is substantially L-shaped, a reflux valve 13 is embedded at an end of the cover plate 43 away from the ink inlet buffer cavity 7, the cover plate 43 is provided with a reflux pump mounting portion 58, a reflux pump 14 is horizontally fixed in the reflux pump mounting portion 58, and the reflux pump 14 is provided parallel to a length direction of the L-shaped cover plate 43. The reflux valve 13 is embedded in the cover plate 43 and provided in proximity to the reflux pump mounting portion 58, the reflux pump 14 has an inlet 141 and an outlet 142, the cover plate 43 is formed with a third channel 44, and the third channel 44 communicates the inlet 141 of the reflux pump 14 with an outlet of the reflux valve 13. The cover plate 43 and the ink cartridge 40 cooperate and are further formed with a fourth channel 56. The fourth channel 56 communicates the outlet 142 of the reflux pump with an inlet of the filter 15a. The fourth channel 56 is partially located in the ink cartridge 40 and partially located in the cover plate 43. As the outlet 142 of the reflux pump and the inlet of the filter 15a are respectively located at two ends of the whole device, the fourth channel 56 spans across the cover plate 43. The reflux valve 13 is located at an upper end of the ink return buffer cavity 6, the cover plate 43 and the ink cartridge 40 cooperate and are further provided with a fifth channel 45, wherein the fifth channel 45 is partially located in the ink cartridge 40 and partially located in the cover plate 43, and the fifth channel 45 communicates the reflux valve 13 with a bottom of the ink return buffer cavity 6. Providing the reflux valve 13 at the upper end of the ink return buffer cavity 6 can reduce a length of the fifth channel 45. As shown in FIG. 2, FIG. 3 and FIG. 5, two side walls of the ink cartridge 40 and the cover plate 43 extending in a length direction are all provided with heating elements 52, inside of the whole ink cartridge 40 and the cover plate 43 is heated by the heating elements 52, and thermal-insulation plates can be provided outside the heating elements 52. The ink cartridge 40 is further provided with an ink inlet 55, and the ink inlet 55 is communicated with the ink return cavity 4 and is configured to inject ink into the whole circulating ink supply system. The ink inlet cavity 5 and the ink return cavity 4 are connected to the inkjet printhead 1 through the ink inlet pipe 11 and the ink return pipe 10. The ink inlet pipe 11 and the ink return pipe 10 are jointly wrapped with a heat conducting block 51 at outside. The heat conducting block 51 contacts the ink cartridge 40, and heat is conducted from the ink cartridge 40 to the heat conducting block 51 and transferred to the ink inlet pipe 11 and the ink return pipe 10 wrapped therein, thus reducing an extra heating element and improving heat utilization. The ink return buffer cavity 6 and the ink inlet buffer cavity 7 do not need to occupy a too large volume, and it is designed that the ink return buffer cavity 6 and the ink inlet buffer cavity 7 are respectively located in the L-shaped half-enclosed structures of the ink return cavity 4 and the ink inlet cavity 5, which facilitates space compactness while meeting volume requirements of the ink inlet cavity 5 and the ink return cavity 4. The reflux pump 14 has a long length, and providing the reflux pump 14 parallel to the length direction of the L-shaped cover plate 43 can make the space compact. The reflux valve 13 is embedded in the cover plate 43 and communicates the reflux pump 14 with the ink return buffer cavity 6 through internal channels, and then the heating chamber is heated by the heating elements 52, so that additional heating of external pipelines can be reduced, and space utilization rate and energy utilization rate are improved.

As shown in FIG. 2, FIG. 3, and FIG. 5, the cover plate 43 is further provided with a first air path interface 46a, a second air path interface 46b, a third air path interface 46c, and a fourth air path interface 46d; the cover plate 43 is formed therein with a sixth channel 47, a seventh channel 48, an eighth channel 49, and a ninth channel 50, wherein the sixth channel 47 communicates the first air path interface 46a with the ink return cavity 4, the seventh channel 48 communicates the third air path interface 46c with the ink return buffer cavity 6, and the first air path interface 46a and the third air path interface 46c are provided in proximity to a side where the ink return cavity 4 and the ink return buffer cavity 6 are located. The eighth channel 49 communicates the second air path interface 46b with the ink inlet cavity 5, and the ninth channel 50 communicates the fourth air path interface 46d with the ink inlet buffer cavity 7. The second air path interface 46b and the fourth air path interface 46d are provided on the other side opposite to the first air path interface 46a and the third air path interface 46c.

The first air path interface 46a, the second air path interface 46b, the third air path interface 46c, and the fourth air path interface 46d are connected to the first air pipe 20, the second air pipe 22, the third air pipe 24, and the fourth air pipe 26 of the air-pressure control module 3, respectively. The air-pressure control module 3 is specifically composed as shown in FIG. 1, which is not be described herein.

The integrated 3D inkjet printing circulating ink supply device has a reasonable layout, except the air-pressure control module 3, the ink inlet pipe 11, and the ink return pipe 10, all of remaining parts and modules are provided in the ink cartridge 40 and the cover plate 43 that have a heating function, fluid channels are realized by internal flow channels of the ink cartridge 40 and the cover plate 43, the ink cartridge 40 and the cover plate 43 are made of a uniform heat conducting material, and through heat conduction, the whole circulation system is ensured to have a uniform temperature, the wax material is ensured to be in a molten state, so as to realize the high-flow printing. The integrated structure design reasonably utilizes internal space, facilitates miniaturization of the device and space saving, and also improves the heat utilization rate.

When the inkjet printhead 1 is in a printing state, the circulating ink supply system has following control:
(1) The first air-pressure cavity 16 provides a pressure for the ink return cavity 4 through the first air pipe 20 to make it maintain a printing pressure P1, the second air-pressure cavity 17 provides a pressure for the ink inlet cavity 5 through the second air pipe 22 to make it maintain a printing pressure P2, the first buffer air-pressure cavity 18 provides the printing pressure P1 for the ink return buffer cavity 6 through the third air pipe 24, and the second buffer air-pressure cavity 19 provides the printing pressure P2 for the ink inlet buffer cavity 7 through the fourth air pipe 26, where P1 is a negative pressure, and P1 and P2 have a pressure difference therebetween; the printing pressure P2 provided for the ink inlet buffer cavity 7 is greater than the printing pressure P1 provided for the ink return buffer cavity 6; and P1 is a large negative pressure, and P2 is a small negative pressure or a positive pressure;
(2) The fluid (i.e., ink) in the ink inlet cavity 5 flows, after entering the inkjet printhead 1 through the ink inlet pipe 11, from the ink return pipe 10 to the ink return cavity 4; and
(3) When the fluid in the ink return cavity 4 reaches a certain height, the fluid flows from the ink return cavity 4 to the ink return buffer cavity 6 through the communicating hole 12a. When a liquid level of the ink return cavity 4 reaches a set height, the ink return liquid-level sensor 9a in the ink return cavity 4 is triggered, the reflux pump 14 is started, the fluid in the ink return buffer cavity 6 is filtered by the reflux valve 13, the reflux pump 14, and the filter 15a in sequence and then flows into the ink inlet buffer cavity 7. When the fluid in the ink inlet buffer cavity 7 reaches a certain height, the fluid flows from the ink inlet buffer cavity 7 to the ink inlet cavity 5, to realize circulation of the fluid in the inkjet printhead 1 and the circulating module 2. Operation of the reflux pump 14 is algorithmically controlled according to a value of the liquid-level sensor or a time parameter to be matched with a corresponding circulation rate of material. The circulation of the fluid in the inkjet printhead 1 and the circulating module 2 can ensure better temperature uniformity of the fluid, and can support some spray heads without a heating module. The circulation can carry away air bubbles and impurities in the spray heads and filter out the same; and the circulation can support printing of some special fluids (e.g. fluids that precipitate, fluids with greater viscosity).

In order to maintain a state of nozzles of the inkjet printhead 1 and ensure the nozzles to be clean, ink pressing is needed. When the inkjet printhead 1 is in an ink-pressing state, the circulating ink supply system has following control:
(1) The pressure sensors regulate an operating speed of the positive-pressure pump 37, to make the positive-pressure pump 37 maintain a certain pressure; and
(2) The first positive-negative pressure switching valve 21, the second positive-negative pressure switching valve 23, the third positive-negative pressure switching valve 25 and the fourth positive-negative pressure switching valve 27 are all switched and connected to the positive-pressure pump 37 (the positive-negative pressure switching valves are all originally communicated with corresponding air-pressure cavities above), and the positive-pressure pump 37 applies the positive pressure to the first air pipe 20, the second air pipe 22, the third air pipe 24 and the fourth air pipe 26 to perform the ink pressing on the inkjet printhead 1.

When the inkjet printhead 1 is in a dormant state, the temperature in the heating chamber is lowered down, but is higher than a solidifying point of the wax material to prevent it from solidifying, and the circulating ink supply system has following control: a dormant pressure P1' of the first air pipe 20 and a dormant pressure P2' of the second air pipe 22 are adjusted to be consistent.

P1' = P2' = (P1 + P2)/2 - P0, where P0 is a correction pressure of the fluid from a dynamic state to a static state; P1 is the printing pressure of the ink return cavity 4 in the printing state, P2 is the printing pressure of the ink inlet cavity 5 in the printing state. The pressure is adjusted in dormancy to make the ink not circulate or slowly circulate, which can protect lifetime of components and parts.

When the inkjet printhead 1 is in a power-on state, the circulating ink supply system of the inkjet printhead 1 has following control: when the inkjet printhead 1 is in the power-on state, a temperature T1 of the fluid in the ink cartridge 40 and a temperature T2 of the inkjet printhead 1 are detected, and if T1 > TO and T2 > T0, where T0 is a temperature of the fluid in a liquid state, then relevant protection (for example, contact protection of the reflux pump 14 can be started, and the negative pressure can act) is released, and the air pressures of the first air pipe 20 and the second air pipe 22 are slowly adjusted to the printing pressure P1 and the printing pressure P2, respectively, to perform the fluid circulation; if T1 or T2 ≤ T0, then it indicates that some fluid is changed into a solid state, the reflux pump 14 is kept turned off, the air pressures of the first air pipe 20 and the second air pipe 22 are both 0, the fluid is first heated by the heating assembly to a set temperature Ta to make the fluid maintain the liquid state, and after the fluid is confirmed to be in the liquid state, the air pressures of the first air pipe 20 and the second air pipe 22 are adjusted to the printing pressure P1 and the printing pressure P2, respectively. For heating time herein, by firstly respectively calculating a temperature difference Δ T1 = T1 - T0 between the temperature T1 of the fluid in the ink cartridge 40 and T0, and a temperature difference Δ T2 = T2 - T0 between the temperature T2 of the inkjet printhead 1 and T0, heating time required by the ink cartridge 40 and the inkjet printhead 1 can be dynamically obtained according to an original solid-liquid heating curve of the fluid, heating and heat transfer designs of the ink cartridge 40 and the inkjet printhead 1 and relevant empirical parameters.

When the inkjet printhead 1 is in a power-off state, the circulating ink supply system has following control: the reflux pump 14 is turned off, the balance valve 36 is opened, the first air-pressure cavity 16 and the second air-pressure cavity 17 communicate through the balance valve 36, finally a pressure difference between the first air-pressure cavity 16 and the second air-pressure cavity 17 is made to be 0, the first buffer air-pressure cavity 18 and the first air-pressure cavity 16 are connected by the first buffer pipe 33; therefore, the first buffer air-pressure cavity 18 and the first air-pressure cavity 16 have an equal pressure, similarly, the second buffer air-pressure cavity 19 and the second air-pressure cavity 17 have an equal pressure, and a pressure difference between the first air-pressure cavity 16, the second air-pressure cavity 17, the first buffer air-pressure cavity 18 and the second buffer air-pressure cavity 19 is 0. For a conventional system, if the system is suddenly powered off, the first air-pressure cavity 16, the second air-pressure cavity 17, the first buffer air-pressure cavity 18, and the second buffer air-pressure cavity 19 maintain a current pressure, and thus the fluid in the ink cartridge 40 still circulates, but the reflux pump 14 does not work; after a certain time, the first air pipe 20 and the third air pipe 24 suck the fluid, and the fluid solidifies when it is cold, which will damage the circulating ink supply system; therefore, for the present circulating ink supply system, by providing the balance valve 36 to make the pressure difference be 0 and stop circulation, power-off protection is carried out, and the inkjet printhead 1 also maintains a proper negative pressure and does not leak, thus preventing waste of the wax material.

### Embodiment 2

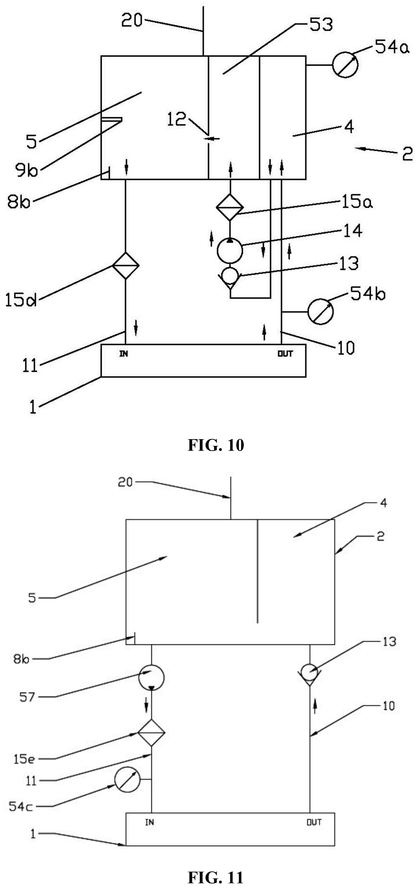

Similarly to the circulating ink supply system in Embodiment 1, a circulating ink supply system in the present embodiment likewise includes the inkjet printhead 1, the circulating module 2 and the air-pressure control module 3, with a difference that the circulating module 2 in the present embodiment has only one buffer cavity. The inkjet printhead 1 and the circulating module 2 in Embodiment 2 are as shown in FIG. 10.

The circulating module 2 includes an ink inlet cavity 5, an ink return cavity 4 and a buffer cavity 53, wherein the ink inlet cavity 5 is connected to a first air pipe 20, with a function of adjusting a negative pressure, the first air pipe 20 is connected to the air-pressure control module 3, wherein the air-pressure control module 3 can be the same as or different from that in FIG. 1, and modules capable of realizing air-pressure controlling and adjusting functions can be used. The ink return cavity 4 is connected to the buffer cavity 53 by a reflux device, a communicating hole 12 is formed between the buffer cavity 53 and the ink inlet cavity 5, an ink return cavity 4 and an ink returning pipe 10 are connected to pressure sensors 54a, 54b, respectively. Two pressure sensors are provided, so that an air pressure above the ink return cavity 4 and a pressure of a fluid in the ink returning pipe 10 can be measured respectively. The ink inlet cavity 5 is provided therein with an ink inlet temperature sensor 8b and an ink inlet liquid-level sensor 9b, and flow of the fluid is as shown by arrows in FIG. 10. The reflux device includes a reflux valve 13, a reflux pump 14, and a filter 15a connected in sequence by pipelines or channels, wherein an outlet of the filter 15a communicates with the buffer cavity 53, and an inlet of the reflux valve 13 is communicated with the ink return cavity 4. The ink inlet pipe 11 may be provided therein with another filter 15d (or not provided).

When the inkjet printhead 1 is in a printing state, the circulating ink supply system has following control:
(1) The air-pressure control module 3 provides a pressure of the ink inlet cavity 5 through the first air pipe 20, to make it greater than the pressure of the ink return cavity 4, where the pressure of the ink inlet cavity 5 is a positive pressure or a negative pressure; (2) the fluid in the ink inlet cavity 5 flows, after entering the inkjet printhead 1 through the ink inlet pipe 11, from the ink return pipe 10 to the ink return cavity 4;
(3) The reflux pump 14 is started, the fluid in the ink return cavity 4 passes through the reflux valve 13, the reflux pump 14, and the filter 15a in sequence to the buffer cavity 53; and when the fluid in the buffer cavity 53 reaches a certain height, the fluid flows from the buffer cavity 53 to the ink inlet cavity 5 through a communicating hole 12, thus realizing circulation of the fluid in the inkjet printhead 1 and the circulating module 2; and
(4) Values of the pressure sensors 54a, 54b are monitored, and according to an integrated algorithm of the pressure sensors 54a, 54b, a connected system negative pressure and a rotation speed of the reflux pump 14, the rotation speed of the reflux pump 14 is controlled and adjusted to be matched with a corresponding material circulation speed, and the system negative pressure is adjusted to an appropriate meniscus pressure. The meniscus pressure is a fluid pressure required by the inkjet printhead 1, where actual parameters of different types of spray heads are different. The printing is mainly based on a standard that the nozzle can keep the fluid without dripping and the printing effect, and the pressure parameter is correspondingly adjusted according to actual printing effect. The system negative pressure herein refers to a pressure difference of the whole system, that is, a difference between the pressure of the ink return cavity 4 and the ink inlet cavity 5, which difference value is a negative value.

According to the integrated 3D inkjet printing circulating ink supply device according to Embodiment 1 shown in FIG. 2 to FIG. 9, the present embodiment also provides an integrated 3D inkjet printing circulating ink supply device, which is of a structure substantially similar to that shown in FIG. 2 to FIG. 9, including: a heating chamber, wherein the heating chamber is provided with an ink return cavity 4, a buffer cavity 53 and an ink inlet cavity 5, wherein the buffer cavity 53 is located between the ink return cavity 4 and the ink inlet cavity 5, and the ink inlet cavity 5 is communicated with the buffer cavity 53 through a communicating hole 12 in the heating chamber; a heating element, wherein the heating element is provided on a periphery of the heating chamber and configured to heat the heating chamber; a reflux device, wherein the reflux device is at least partially embedded in the heating chamber, and the reflux device is communicates the ink return cavity 4 with the buffer cavity 53 through internal channels located in the heating chamber; and an ink inlet pipe 11 and an ink return pipe 10, wherein the ink inlet pipe 11 connects the ink inlet cavity 5 and an inkjet printhead 1, and the ink return pipe 10 connects the ink return cavity 4 and the inkjet printhead 1. A reflux valve 13 is provided above the ink return cavity 4, the reflux valve 13 is communicated with a bottom of the ink return cavity 4 through an internal channel, the reflux pump 14 is fixed to an upper part of the heating chamber, an inlet of the reflux pump 14 is communicated with an outlet of the reflux valve 13 through an internal channel, the filter 15a is provided in proximity to the buffer cavity 53, an outlet of the reflux pump 14 is communicated with the filter 15a through an internal channel, and an outlet of the filter 15a is communicated with the buffer cavity 53 through an internal channel. The filter 15a is embedded in an ink cartridge 40 and communicates the reflux pump 14 with an ink return buffer cavity 7 through internal channels, and then the heating chamber is heated by heating element 52, so that additional heating of external pipelines can be reduced, and space utilization rate and energy utilization rate are improved.

### Embodiment 3

As shown in FIG. 11, a circulating ink supply system includes an inkjet printhead 1, a circulating module 2 and a circulating pump 57. The circulating module 2 includes an ink inlet cavity 5 and an ink return cavity 4, wherein the ink inlet cavity 5 and the ink return cavity 4 are communicated or integrated. The circulating pump 57 is provided in an ink inlet pipe 11, the circulating pump 57 provides power required by the circulating ink supply system, an inlet of the circulating pump 57 is connected to the ink inlet cavity 5 through the ink inlet pipe 11, a filter 15e is connected to an outlet of the circulating pump 57, an outlet of the filter 15e is connected to an ink inlet position IN of the inkjet printhead 1, an ink return position OUT of the inkjet printhead 1 is connected to the ink return cavity 4 through an ink return pipe 10, the ink return pipe 10 is provided with a reflux valve 13, and the reflux valve 13 may be a one-way valve or a solenoid valve. The ink inlet cavity 5 is connected to a first air pipe 20, with a function of adjusting a negative pressure, and the first air pipe 20 is connected to an air-pressure control module. The ink inlet pipe 11 is provided with a pressure sensor 54c.

When the inkjet printhead 1 is in a printing state, the circulating ink supply system has following control:
(1) The first air pipe 20 provides a negative pressure for the inkjet printhead 1;
(2) The circulating pump 57 is started, a fluid in the ink inlet cavity 5 flows, after entering the inkjet printhead 1 through the ink inlet pipe 11, to the ink return cavity 4 from the ink return pipe 10, the ink inlet cavity 5 is communicated with the ink return cavity 4, and ink flows back to the ink inlet cavity 5, so as to realize circulation of the fluid in the inkjet printhead 1 and the circulating module 2; and
(3) A value of a pressure sensor 54c is monitored, and according to an integrated algorithm of the pressure sensor 54c, a connected system negative pressure and a rotation speed of the circulating pump 57, the rotation speed of the circulating pump 57 is controlled and adjusted to be matched with a corresponding material circulation speed, and the system negative pressure is adjusted to an appropriate meniscus pressure. The system negative pressure herein refers to a negative pressure provided by the first air pipe 20 for the inkjet printhead 1.

The above are merely for specific embodiments of the present disclosure; but the technical features of the present disclosure are not limited thereto. Any simple changes, equivalent substitutions, modifications, or the like for solving the same technical problems and realizing substantially the same technical effects based on the present disclosure are all covered within the scope of protection of the present disclosure.

## Claims

1. A circulating ink supply system suitable for 3D inkjet printing, **characterized by** comprising:
an inkjet printhead, provided with a plurality of nozzles for jetting ink, wherein the ink is a high-temperature phase change ink or a high-viscosity ink;
a circulating module, provided with an ink return cavity and an ink inlet cavity, wherein the ink return cavity is communicated with the ink inlet cavity; and the ink return cavity and the ink inlet cavity are connected to the inkjet printhead through an ink return pipe and an ink inlet pipe, respectively;
a heating element, configured to heat the circulating module; and
a power module, configured to provide kinetic energy for the circulating ink supply system, to make the ink circulate between the circulating module and the inkjet printhead.

2. The circulating ink supply system suitable for 3D inkjet printing according to claim 1, wherein the power module is a circulating pump, and the circulating pump is provided in the ink inlet pipe, and is configured to convey the ink from the ink inlet cavity to the inkjet printhead.

3. The circulating ink supply system suitable for 3D inkjet printing according to claim 1, wherein the power module is an air-pressure control module, and the air-pressure control module is connected to the ink inlet cavity or the ink return cavity, and is configured to control a pressure difference between the ink inlet cavity and the ink return cavity and convert it into the kinetic energy of the circulating ink supply system.

4. The circulating ink supply system suitable for 3D inkjet printing according to claim 2 or 3, wherein the circulating module further comprises a buffer cavity, the buffer cavity is communicated with the ink return cavity and the ink inlet cavity; and the heating element heats the ink return cavity, the ink inlet cavity, the buffer cavity and pipelines or channels communicating the buffer cavity with the ink return cavity and the ink inlet cavity.

5. The circulating ink supply system suitable for 3D inkjet printing according to any one of claims 1-4, wherein the heating element is capable of heating the circulating module to 60-150 °C; the ink inlet cavity is provided therein with an ink inlet temperature sensor and an ink inlet liquid-level sensor, to monitor a temperature of the ink and a liquid level in the ink inlet cavity; the ink return cavity is provided therein with an ink return liquid-level sensor to monitor a liquid level of the ink in the ink return cavity, and a side wall of the ink return cavity is provided with an ink return temperature sensor to monitor a temperature of the side wall.

6. The circulating ink supply system suitable for 3D inkjet printing according to claim 4, wherein the buffer cavity and the ink inlet cavity are communicated through a communicating hole, and the ink return cavity and the buffer cavity are communicated through a reflux device; the circulating ink supply system controls a pressure of the ink inlet cavity/the ink return cavity through the air-pressure control module, so as to make the ink enter the buffer cavity from the ink return cavity through the communicating hole, enter the ink inlet cavity through the reflux device, then enter the inkjet printhead through the ink inlet pipe and return to the ink return cavity through the ink return pipe, thus forming circulation.

7. The circulating ink supply system suitable for 3D inkjet printing according to claim 6, wherein the reflux device comprises a reflux valve, a reflux pump, and a filter connected in sequence, wherein an inlet of the reflux valve is connected to the ink return cavity, and an outlet of the filter is connected to the buffer cavity.

8. The circulating ink supply system suitable for 3D inkjet printing according to claim 4, wherein the buffer cavity comprises an ink return buffer cavity and an ink inlet buffer cavity, wherein the ink return buffer cavity and the ink return cavity are communicated through a communicating hole, the ink inlet buffer cavity and the ink inlet cavity are communicated through another communicating hole, and the ink return buffer cavity and the ink inlet buffer cavity are communicated through a reflux device, wherein the reflux device comprises a reflux valve, a reflux pump, and a filter connected in sequence, an inlet of the reflux valve is connected to the ink return buffer cavity, and an outlet of the filter is connected to the ink inlet buffer cavity.

9. The circulating ink supply system suitable for 3D inkjet printing according to claim 8, wherein the power module is an air-pressure control module, and the air-pressure control module comprises a first pressure control module and a second pressure control module, wherein the first pressure control module is connected to the ink return cavity, and is configured to control a pressure of the ink return cavity, and the pressure of the ink return cavity is a negative pressure; the second pressure control module is connected to the ink inlet cavity, and is configured to control a pressure of the ink inlet cavity, and the pressure of the ink inlet cavity can be a positive pressure or a negative pressure; through the air-pressure control module, the circulating ink supply system makes the ink enter the ink return buffer cavity from the ink return cavity through the communicating hole, enter the ink inlet buffer cavity through the reflux device, enter the ink inlet cavity through the another communicating hole, enter the inkjet printhead through the ink inlet pipe, and then return to the ink return cavity through the ink return pipe, thus forming circulation.

10. The circulating ink supply system suitable for 3D inkjet printing according to claim 9, wherein the air-pressure control module comprises a first air-pressure cavity, a second air-pressure cavity, a first buffer air-pressure cavity and a second buffer air-pressure cavity, the ink return cavity is connected to the first air-pressure cavity through a first positive-negative pressure switching valve, the ink inlet cavity is connected to the second air-pressure cavity through a second positive-negative pressure switching valve, the ink return buffer cavity is connected to the first buffer air-pressure cavity through a third positive-negative pressure switching valve, and the ink inlet buffer cavity is connected to the second buffer air-pressure cavity through a fourth positive-negative pressure switching valve, wherein the first air-pressure cavity and the second air-pressure cavity are each connected to an air-pressure sensor, and the first positive-negative pressure switching valve, the second positive-negative pressure switching valve, the third positive-negative pressure switching valve and the fourth positive-negative pressure switching valve are all connected to a same positive-pressure pump.

11. The circulating ink supply system suitable for 3D inkjet printing according to claim 9, wherein a first air-pressure cavity is connected to a first air supply valve and a first pressure relief valve, a second air-pressure cavity is connected to a second air supply valve and a second pressure relief valve, the first air-pressure cavity and a first buffer air-pressure cavity are connected through a first buffer connecting pipe, the second air-pressure cavity and a second buffer air-pressure cavity are connected through a second buffer connecting pipe; the first pressure relief valve and the second pressure relief valve are each connected to a filter, the first air supply valve and the second air supply valve are each connected to an air pump, and a balance valve is connected between the first air-pressure cavity and the second air-pressure cavity.

12. A control method for a circulating ink supply system suitable for 3D inkjet printing, **characterized in that** the circulating ink supply system is according to any one of claims 1-3, and the control method comprises steps of:
(1) when the inkjet printhead is in a printing state, the power module provides kinetic energy for circulation of the ink;
(2) the ink in the ink inlet cavity flows, after entering the inkjet printhead through the ink inlet pipe, from the ink return pipe to the ink return cavity; and
(3) when the ink in the ink return cavity reaches a certain height, the ink enters the ink inlet cavity communicating with the ink return cavity, to realize circulation of the ink in the inkjet printhead and a circulating ink supply structure.

13. A control method for a circulating ink supply system suitable for 3D inkjet printing, **characterized in that** the circulating ink supply system is according to claims 4-7, and the control method comprises steps of:
(1) when the inkjet printhead is in a printing state, the air-pressure control module controls a pressure of the ink inlet cavity, to make it greater than a pressure of the ink return cavity, wherein the pressure of the ink inlet cavity is a positive pressure or a negative pressure;
(2) the ink in the ink inlet cavity flows, after entering the inkjet printhead through the ink inlet pipe, from the ink return pipe to the ink return cavity; and
(3) the reflux pump is started, the ink in the ink return cavity passes through the reflux valve, the reflux pump, and the filter in sequence to the buffer cavity, wherein when the ink in the buffer cavity reaches a certain height, the ink flows from the buffer cavity to the ink inlet cavity through a communicating hole, thus realizing circulation of the ink in the inkjet printhead and the circulating module.

14. The control method for a circulating ink supply system suitable for 3D inkjet printing according to claim 12, wherein the control method further comprises a step (4): a value of a pressure sensor is monitored, and according to an integrated algorithm of the pressure sensor, a connected system negative pressure and a rotation speed of the reflux pump, the rotation speed of the reflux pump is controlled and adjusted so as to be matched with a corresponding material circulation speed, and the system negative pressure is adjusted to an appropriate meniscus pressure.

15. A control method for a circulating ink supply system suitable for 3D inkjet printing, **characterized in that** the circulating ink supply system is according to claims 8-11, and the control method comprises steps of:
(1) when the inkjet printhead is in a printing state, the air-pressure control module controls a pressure between the ink inlet cavity and the ink return cavity, to make a pressure of the ink inlet cavity greater than a pressure of the ink return cavity, wherein the pressure of the ink inlet cavity is a positive pressure or a negative pressure, and the pressure of the ink return cavity is controlled to be a negative pressure;
(2) the ink in the ink inlet cavity flows, after entering a spray head through the ink inlet pipe, from the ink return pipe to the ink return cavity; and
(3) when the ink in the ink return cavity reaches a certain height, the ink flows from the ink return cavity to the ink return buffer cavity through the communicating hole, wherein when a liquid level of the ink return cavity reaches a set height, an ink return liquid-level sensor in the ink return cavity is triggered when the ink is detected, the reflux pump is started, and the ink in the ink return buffer cavity is filtered by the reflux valve, the reflux pump, and the filter in sequence and then flows into the ink inlet buffer cavity, wherein when the ink in the ink inlet buffer cavity reaches a certain height, the ink flows from the ink inlet buffer cavity to the ink inlet cavity, thus realizing circulation of the ink in the inkjet printhead and the circulating module.

16. The control method for a circulating ink supply system suitable for 3D inkjet printing according to claim 15, wherein specific operations of the step (1) are as follows: the first air-pressure cavity provides a pressure for the ink return cavity through a first air pipe to make it maintain a printing pressure P1, the second air-pressure cavity provides a pressure for the ink inlet cavity through a second air pipe to make it maintain a printing pressure P2, the first buffer air-pressure cavity provides the printing pressure P1 for the ink return buffer cavity through a third air pipe, and the second buffer air-pressure cavity provides the printing pressure P2 for the ink inlet buffer cavity through a fourth air pipe, where P1 is a negative pressure, and P2 is greater than P1.

17. The control method for a circulating ink supply system suitable for 3D inkjet printing according to claim 15, wherein when the inkjet printhead is in an ink-pressing state, the circulating ink supply system has controls of:
(1) a pressure sensor regulates an operating speed of a positive-pressure pump, to make the positive-pressure pump maintain a certain pressure; and
(2) the first positive-negative pressure switching valve, the second positive-negative pressure switching valve, the third positive-negative pressure switching valve and the fourth positive-negative pressure switching valve are all switched and connected to the positive-pressure pump, and the positive-pressure pump applies a positive pressure to the first air pipe, the second air pipe, the third air pipe and the fourth air pipe to perform ink pressing on the inkjet printhead.

18. The control method for a circulating ink supply system suitable for 3D inkjet printing according to claim 16, wherein when the spray head is in a dormant state, a temperature in a heating chamber is lowered down, but is higher than a solidifying point of a high-temperature phase change material, a dormant pressure P1' of the first air pipe and a dormant pressure P2' of the second air pipe are adjusted to be consistent, and P1' = P2' = (P1 + P2)/2 - P0, where P0 is a correction pressure of the ink from a dynamic state to a static state, P1 is the printing pressure of the ink return cavity in the printing state, and P2 is the printing pressure of the ink inlet cavity in the printing state.

19. The control method for a circulating ink supply system suitable for 3D inkjet printing according to claim 14, wherein when the inkjet printhead is in a power-on state, a temperature T1 of ink in an ink cartridge and a temperature T2 of the inkjet printhead are detected, and if T1 ≥ T0 and T2 ≥ T0, where T0 is a temperature of the ink in a liquid state, then relevant protection is released, and air pressures of a first air pipe and a second air pipe are slowly adjusted to a printing pressure P1 and a printing pressure P2, respectively, to perform ink circulation; if T1 or T2 ≤ T0, a reflux pump is kept turned off, the air pressures of the first air pipe and the second air pipe are both 0, the ink is first heated by a heating assembly to a set temperature Ta to make the ink maintain the liquid state, and after the ink is confirmed to be in the liquid state, the air pressures of the first air pipe and the second air pipe are adjusted to the printing pressure P1 and the printing pressure P2, respectively.

20. The control method for a circulating ink supply system suitable for 3D inkjet printing according to claim 14, wherein when the spray head is in a power-off state, a reflux pump is turned off, a balance valve is opened, and a pressure differences among a first air-pressure cavity, a second air-pressure cavity, a first buffer air-pressure cavity, and a second buffer air-pressure cavity are all 0.

21. An integrated 3D inkjet printing circulating ink supply device, **characterized by** comprising:
a heating chamber, provided with an ink return cavity and an ink inlet cavity;
a heating element, provided on a periphery of the heating chamber and configured to heat the heating chamber; and
an ink inlet pipe and an ink return pipe, wherein the ink inlet pipe connects the ink inlet cavity and the inkjet printhead, and the ink return pipe connects the ink return cavity and the inkjet printhead.

22. The integrated 3D inkjet printing circulating ink supply device according to claim 21, further comprising: a reflux device, at least partially embedded in the heating chamber, wherein the heating chamber is provided with an ink return buffer cavity and an ink inlet buffer cavity, the ink inlet cavity and the ink inlet buffer cavity are provided adjacent to each other and are communicated through a first channel in the heating chamber, the ink return cavity and the ink return buffer cavity are provided adjacent to each other and are communicated through a communicating hole, and the reflux device communicates the ink return buffer cavity with the ink inlet buffer cavity through internal channels located in the heating chamber.

23. The integrated 3D inkjet printing circulating ink supply device according to claim 22, wherein the heating chamber comprises an ink cartridge and a cover plate, the ink cartridge and the cover plate are sealed and fixed, and the ink return cavity, the ink return buffer cavity, the ink inlet buffer cavity and the ink inlet cavity are provided in the ink cartridge, wherein the ink return cavity and the ink inlet cavity are L-shaped, the ink return buffer cavity and the ink inlet buffer cavity are located in L-shaped half-enclosed structures of the ink return cavity and the ink inlet cavity, respectively, and short sides of the ink return cavity and the ink inlet cavity are provided adjacent to each other.

24. The integrated 3D inkjet printing circulating ink supply device according to claim 23, wherein the cover plate is L-shaped, the cover plate has a reflux pump mounting portion, the reflux device comprises a reflux pump, the reflux pump is horizontally fixed in the reflux pump mounting portion, and the reflux pump is provided parallel to a length direction of the L-shaped cover plate.

25. The integrated 3D inkjet printing circulating ink supply device according to claim 23, wherein the reflux device further comprises a reflux valve, the reflux valve is embedded in the cover plate and located at an upper end of the ink return buffer cavity; the cover plate is provided with a third channel, the third channel communicates an inlet of a reflux pump with an outlet of the reflux valve, the cover plate and the ink cartridge cooperate and are further provided with a fifth channel, the fifth channel is partially located in the ink cartridge and partially located in the cover plate, and the fifth channel communicates the reflux valve with a bottom of the ink return buffer cavity; the reflux device further comprises a filter, the filter is embedded below the ink inlet buffer cavity, the ink cartridge is further provided therein with a second channel, the second channel communicates the filter with the ink inlet buffer cavity; the cover plate and the ink cartridge cooperate and are further provided with a fourth channel, and the fourth channel communicates an outlet of the reflux pump with an inlet of the filter.

26. The integrated 3D inkjet printing circulating ink supply device according to claim 21, wherein the integrated inkjet printing circulating ink supply device further comprises an air path interface, and the air path interface is connected to an air-pressure control module, wherein the air path interface is provided on a side wall of a cover plate, and the air path interface is communicated with the ink inlet cavity or the ink return cavity through a channel inside the cover plate.

27. The integrated 3D inkjet printing circulating ink supply device according to claim 26, wherein the cover plate is provided with a first air path interface, a second air path interface, a third air path interface, and a fourth air path interface, the cover plate is provided therein with a sixth channel, a seventh channel, an eighth channel, and a ninth channel, wherein the sixth channel communicates the first air path interface with the ink return cavity, the seventh channel communicates the third air path interface with the ink return buffer cavity, and the first air path interface and the third air path interface are provided in proximity to a side where the ink return cavity and the ink return buffer cavity are located; the eighth channel communicates the second air path interface with the ink inlet cavity, the ninth channel communicates the fourth air path interface with the ink inlet buffer cavity; the second air path interface and the fourth air path interface are provided on the other side opposite to the first air path interface and the third air path interface; the first air path interface, the second air path interface, the third air path interface, and the fourth air path interface are connected to the first air pipe, the second air pipe, the third air pipe, and the fourth air pipe of the air-pressure control module, respectively.

28. The integrated 3D inkjet printing circulating ink supply device according to any one of claims 21-27, wherein the ink inlet pipe and the ink return pipe are jointly wrapped by a heat conducting block at outside, the heat conducting block is in contact with an ink cartridge for heat conduction; the ink inlet cavity is provided therein with an ink inlet temperature sensor and an ink inlet liquid-level sensor, the ink return cavity is provided therein with an ink return liquid-level sensor, and an outer wall of the ink return cavity is provided with an ink return temperature sensor to monitor a temperature of the ink cartridge.

29. An integrated 3D inkjet printing circulating ink supply device, **characterized by** comprising:
a heating chamber, provided with an ink return cavity, a buffer cavity and an ink inlet cavity, wherein the buffer cavity is located between the ink return cavity and the ink inlet cavity, and the ink inlet cavity and the buffer cavity are communicated through a communicating hole in the heating chamber;
a heating element, provided on a periphery of the heating chamber and configured to heat the heating chamber;
a reflux device, at least partially embedded in the heating chamber, wherein the reflux device communicates the ink return cavity with the buffer cavity through internal channels located in the heating chamber; and
an ink inlet pipe and an ink return pipe, wherein the ink inlet pipe connects the ink inlet cavity and an inkjet printhead, and the ink return pipe connects the ink return cavity and the inkjet printhead.

30. The integrated 3D inkjet printing circulating ink supply device according to claim 29, wherein the reflux device comprises a reflux valve, a reflux pump and a filter, and the reflux valve is provided above the ink return cavity, wherein the reflux valve is communicated with a bottom of the ink return cavity through an internal channel, the reflux pump is fixed to an upper part of the heating chamber, an inlet of the reflux pump and an outlet of the reflux valve are communicated through an internal channel, the filter is provided in proximity to the buffer cavity, an outlet of the reflux pump is communicated with the filter through an internal channel, and an outlet of the filter is communicated with the buffer cavity through an internal channel.
